# EUROPEAN PATENT APPLICATION

(11) **EP 4 254 386 A1**
(43) Date of publication of application: **04.10.2023**
(21) Application number: 21897952.4
(22) Date of filing: 24.11.2021
(51) Int. Cl.: G09B 23/28, C08L 33/00, C08L 75/04

(54) **IMITATION BIOMEMBRANE MODEL AND IMITATION EYEBALL MODEL**

(30) Priority: 25.11.2020 JP 2020195582
(71) Applicant: Mitsui Chemicals, Inc., Tokyo 104-0028 (JP)
(72) Inventor: KAGEOKA, Masakazu, Sodegaura-shi, Chiba 299-0265 (JP); KAJIURA, Makoto, Sodegaura-shi, Chiba 299-0265 (JP); ARAI, Fumihito, Tokyo 113-8656 (JP); OMATA, Seiji, Kumamoto-shi, Kumamoto 860-8555 (JP)
(74) Representative: Hoffmann Eitle
(86) International application number: PCT/JP2021/042926
(87) International publication number: WO 2022/113980

(57) **Abstract**

A simulated biomembrane model is made of a cast film of a polyurethane dispersion.

## Description

### TECHNICAL FIELD

The present invention relates to a simulated biomembrane model and a simulated eyeball model.

### BACKGROUND ART

Conventionally, in a medical site, members which imitate the human body are used for surgical practice. For example, a simulated eyeball has been used in eyeball surgical practice. More specifically, macular hole is known as a disease of eyeballs. In the treatment of macular hole, an internal limiting membrane is peeled by surgery, and the convergence of the hole is attempted. On the other hand, the internal limiting membrane is an extremely thin membrane, and the retina is located immediately below the internal limiting membrane. Therefore, delicate arts are required for surgical dissection of the internal limiting membrane. Therefore, to carry out the surgical practice, a simulated internal limiting membrane having a tactile sensation similar to the internal limiting membrane is required, and furthermore, a simulated eyeball for surgical practice having its simulated internal limiting membrane is required.

As the simulated eyeball, for example, the following internal limiting membrane peeling model is known. That is, the internal limiting membrane peeling model includes a simulated retina and a simulated internal limiting membrane formed on the simulated retina. Further, the simulated retina is made of silicone rubber. Then, the simulated internal limiting membrane is made of hydrogel of a polyvinyl alcohol resin which is coated onto the simulated retina (ref: for example, Patent Document 1 (Test Example 1)).

### Citation List

### Patent Document

Patent Document 1: International Patent Publication No. WO2018/097031

### SUMMARY OF THE INVENTION

### PROBLEM TO BE SOLVED BY THE INVENTION

In the above-described internal limiting membrane peeling model, adhesion of the polyvinyl alcohol resin to the silicone rubber is not sufficient. Therefore, the above-described internal limiting membrane peeling model may not provide a tactile sensation similar to the internal limiting membrane.

The present invention provides a simulated biomembrane model and a simulated eyeball model having a tactile sensation similar to a biomembrane.

### MEANS FOR SOLVING THE PROBLEM

The present invention [1] includes a simulated biomembrane model made of a cast film of a polyurethane dispersion.

The present invention [2] includes the simulated biomembrane model described in the above-described [1], wherein the polyurethane dispersion includes a low Tg polyurethane resin having a glass transition temperature of below 20°C.

The present invention [3] includes the simulated biomembrane model described in the above-described [2], wherein the polyurethane dispersion further includes an inorganic filler.

The present invention [4] includes the simulated biomembrane model described in the above-described [3], wherein a ratio of the inorganic filler is 2% by mass or more and 10% by mass or less with respect to the total amount of the solid content of the polyurethane dispersion.

The present invention [5] includes the simulated biomembrane model described in any one of the above-described [2] to [4], wherein the polyurethane dispersion further includes a high Tg polyurethane resin having a glass transition temperature of 20°C or more.

The present invention [6] includes the simulated biomembrane model described in the above-described [1], wherein the polyurethane dispersion includes a high Tg polyurethane resin having a glass transition temperature of 20°C or more.

The present invention [7] includes the simulated biomembrane model described in the above-described [6], wherein the polyurethane dispersion further includes an acrylic resin.

The present invention [8] includes the simulated biomembrane model described in the above-described [7], wherein the acrylic resin includes a low hydrophilic acrylic resin.

The present invention [9] includes the simulated biomembrane model described in the above-described [7] or [8], wherein a ratio of the acrylic resin is 20% by mass or more and 50% by mass or less with respect to the total amount of the solid content of the polyurethane dispersion.

The present invention [10] includes the simulated biomembrane model described in any one of the above-described [6] to [9], wherein the polyurethane dispersion further includes a low Tg polyurethane resin having a glass transition temperature of below 20°C.

The present invention [11] includes the simulated biomembrane model described in any one of the above-described [1] to [10] being a simulated internal limiting membrane.

The present invention [12] includes a simulated eyeball model for eyeball surgical practice including a simulated retina and a simulated internal limiting membrane in contact with the simulated retina, wherein the simulated internal liming membrane is the simulated biomembrane model described in any one of the above-described [1] to [11].

The present invention [13] includes the simulated eyeball model described in the above-described [12], wherein the simulated retina includes a polyurethane gel and an internal mold release agent.

The present invention [14] includes the simulated eyeball model described in the above-described [13], wherein a ratio of the internal mold release agent is 0.5 parts by mass or more and 10 parts by mass or less with respect to 100 parts by mass of the polyurethane gel.

### EFFECT OF THE INVENTION

The simulated biomembrane model of the present invention is made of a cast film of a polyurethane dispersion. Therefore, the simulated biomembrane model and the simulated eyeball model have a tactile sensation similar to a biomembrane.

### BRIEF DESCRIPTION OF THE DRAWINGS

FIG. 1 shows a schematic view illustrating one embodiment of a simulated biomembrane model of the present invention.
FIG. 2 shows a schematic view illustrating one embodiment of a simulated eyeball model of the present invention.

### DESCRIPTION OF EMBODIMENTS

A simulated biomembrane model of the present invention is made of a cast film of a polyurethane dispersion. The cast film is a film obtained by a known casting method, and includes a polyurethane resin. More specifically, the cast film is obtained by coating and drying of the polyurethane dispersion. In other words, the simulated biomembrane model is made of a composition containing the polyurethane resin.

The polyurethane dispersion is a raw material for the simulated biomembrane model. The polyurethane dispersion (hereinafter, referred to as a raw material polyurethane dispersion) is an aqueous dispersion of a polyurethane resin. By using the raw material polyurethane dispersion, it is possible to obtain the simulated biomembrane model having a tactile sensation similar to a biomembrane, and also, to improve industrial mass productivity.

Examples of the polyurethane resin include internal emulsion-type polyurethane resins. The internal emulsion-type polyurethane resin contains a hydrophilic group in a molecule. Examples of the hydrophilic group include an anionic group, a cationic group, and a nonionic group, and preferably, an anionic group and a nonionic group are used. An example of the anionic group includes a carboxy group. An example of the nonionic group includes an oxyethylene group.

An example of the internal emulsion-type polyurethane resin includes an anionic polyurethane resin containing a carboxy group in a side chain. Further, an example of the internal emulsion-type polyurethane resin includes a nonionic polyurethane resin having an oxyethylene group in a main chain or a side chain.

The raw material polyurethane dispersion may include, for example, a low Tg polyurethane resin having a glass transition temperature of below 20°C. By the low Tg polyurethane resin, a peeling tactile sensation similar to the biomembrane is obtained.

The low Tg polyurethane resin is produced by a known method. More specifically, a raw material component of the polyurethane resin is appropriately selected and the urethanization reaction conditions are appropriately adjusted so that the glass transition temperature is within a range to be described later.

The glass transition temperature of the low Tg polyurethane resin is below 20°C, preferably below 10°C, more preferably below 0°C. Further, the glass transition temperature of the low Tg polyurethane resin is, for example, -80°C or more, preferably -50°C or more, more preferably - 30°C or more.

The glass transition temperature of the polyurethane resin is a peak value of tanδ, which is observed by subjecting a sample of the polyurethane resin to dynamic viscoelasticity measurement in a tensile mode. The measurement conditions are as follows: temperature range of -100°C to 200°C, temperature rising rate of 5°C/min, and measurement frequency of 10Hz. Also, a size of the sample is as follows: thickness of 100 µm and width of 5 mm (hereinafter, the same).

Further, the low Tg polyurethane resin is preferably dispersed in water. In other words, the raw material polyurethane dispersion preferably contains a dispersion of the low Tg polyurethane resin (hereinafter, referred to as a low Tg polyurethane dispersion).

In the low Tg polyurethane dispersion, the solid content concentration of the low Tg polyurethane resin is, for example, 10% by mass or more, preferably 20% by mass or more. Further, the solid content concentration of the low Tg polyurethane resin is, for example, 50% by mass or less, preferably 40% by mass or less.

The low Tg polyurethane dispersion can be obtained as a commercially available product. An example of the commercially available product of the low Tg polyurethane dispersion includes TAKELAC W-6110 (trade name, Tg -20°C, anionic polyurethane resin, solid content concentration of 32% by mass, manufactured by Mitsui Chemicals, Inc.). These may be used alone or in combination of two or more.

Further, the raw material polyurethane dispersion may also contain, for example, a high Tg polyurethane resin having the glass transition temperature of 20°C or more. By the high Tg polyurethane resin, the peeling tactile sensation similar to the biomembrane is obtained.

The high Tg polyurethane resin is produced by a known method. More specifically, a raw material component of the polyurethane resin is appropriately selected and the urethanization reaction conditions are appropriately adjusted so that the glass transition temperature is within a range to be described later.

The glass transition temperature of the high Tg polyurethane resin is 20°C or more, preferably 50°C or more, more preferably 100°C or more. Further, the glass transition temperature of the high Tg polyurethane resin is, for example, 200°C or less, preferably 180°C or less, more preferably 150°C or less.

Further, the high Tg polyurethane resin is preferably dispersed in water. In other words, the raw material polyurethane dispersion preferably contains a dispersion of the high Tg polyurethane resin (hereinafter, referred to as a high Tg polyurethane dispersion).

In the high Tg polyurethane dispersion, the solid content concentration of the high Tg polyurethane resin is, for example, 10% by mass or more, preferably 20% by mass or more. Further, the solid content concentration of the high Tg polyurethane resin is, for example, 50% by mass or less, preferably 40% by mass or less.

The high Tg polyurethane dispersion can be obtained as a commercially available product. An example of the commercially available product of the high Tg polyurethane dispersion includes TAKELAC W-615 (trade name, Tg 103°C, high TG polyurethane dispersion, anionic polyurethane resin, solid content concentration of 35% by mass, manufactured by Mitsui Chemicals, Inc.). These may be used alone or in combination of two or more.

The raw material polyurethane dispersion may contain the low Tg polyurethane resin alone. In addition, the raw material polyurethane dispersion may contain the high Tg polyurethane resin alone. In addition, the raw material polyurethane dispersion may contain both the low Tg polyurethane resin and the high Tg polyurethane resin.

When the raw material polyurethane dispersion contains the low Tg polyurethane resin and the high Tg polyurethane resin, a content ratio of these is appropriately set in accordance with its purpose and application. For example, the ratio of the low Tg polyurethane resin is, for example, 5% by mass or more, preferably 10% by mass or more with respect to the total amount of the low Tg polyurethane resin and the high Tg polyurethane resin (total amount of the polyurethane resin). Further, the ratio of the low Tg polyurethane resin is, for example, 60% by mass or less, preferably 40% by mass or less. Further, the ratio of the high Tg polyurethane resin is, for example, 40% by mass or more, preferably 60% by mass or more. Further, the ratio of the high Tg polyurethane resin is, for example, 95% by mass or less, preferably 90% by mass or less.

Further, the raw material polyurethane dispersion may also contain an inorganic filler in addition to the polyurethane resin (low Tg polyurethane resin and/or high Tg polyurethane resin). By the inorganic filler, the peeling tactile sensation similar to the biomembrane is obtained. In the following, the raw material polyurethane dispersion containing the inorganic filler may be referred to as an inorganic filler-containing polyurethane dispersion.

Examples of the inorganic filler include talc, alumina, silica, clay, barium sulfate, titanium oxide, kaolin, calcium oxide, glass balloon, bentonite, mica, sericite, magnesia, wollastonite, xonotlite, and whisker. These inorganic fillers may be used alone or in combination of two or more. As the inorganic filler, preferably, bentonite is used. Further, the inorganic filler may be surface-treated if necessary.

The content ratio of the inorganic filler is appropriately set in accordance with its purpose and application. For example, the ratio of the inorganic filler is, for example, 1 part by mass or more, preferably 3 parts by mass or more, more preferably 5 parts by mass or more, and for example, 50 parts by mass or less, preferably 25 parts by mass or less, more preferably 10 parts by mass or less with respect to 100 parts by mass of the polyurethane resin (total amount of the solid content).

The inorganic filler is preferably added to the low Tg polyurethane dispersion. That is, the inorganic filler-containing polyurethane dispersion preferably contains the low Tg polyurethane dispersion.

In other words, the raw material polyurethane dispersion preferably contains the low Tg polyurethane resin, and furthermore, contains the inorganic filler. When the raw material polyurethane dispersion contains the low Tg polyurethane resin and the inorganic filler, it is possible to obtain the peeling tactile sensation similar to the biomembrane, and furthermore, to suppress the inclusion of water bubbles in the simulated biomembrane model.

Further, the inorganic filler-containing polyurethane dispersion may further contain the high Tg polyurethane resin at an appropriate ratio.

In other words, the raw material polyurethane dispersion more preferably contains the low Tg polyurethane resin, furthermore, contains the inorganic filler, and in addition, contains the high Tg polyurethane resin. By the high Tg polyurethane resin, particularly, the peeling tactile sensation similar to the biomembrane is obtained.

The simulated biomembrane model is obtained by coating and drying of the inorganic filler-containing polyurethane dispersion by a known casting method. In other words, in this case, the simulated biomembrane model is made of a composition containing the polyurethane resin and the inorganic filler.

When the inorganic filler-containing polyurethane dispersion contains the polyurethane resin (low Tg polyurethane resin and/or high Tg polyurethane resin) and the inorganic filler, the content ratio of these is appropriately set in accordance with its purpose and application.

The content ratio of each component is adjusted, for example, as a ratio with respect to the total amount of the solid content. The total amount of the solid content is, for example, the total mass of the mass of the low Tg polyurethane resin (solid content), the mass of the high Tg polyurethane resin (solid content), the mass of the inorganic filler (solid content), and the mass of an acrylic resin (solid content) to be described later (hereinafter, the same).

For example, the total amount of the inorganic filler is, for example, 1% by mass or more, preferably 2% by mass or more, more preferably 5% by mass or more with respect to the total amount of the solid content of the inorganic filler-containing polyurethane dispersion. Further, the total amount of the inorganic filler is, for example, 30% by mass or less, preferably 20% by mass or less, more preferably 10% by mass or less. When the ratio of the inorganic filler is within the above-described range, particularly, the peeling tactile sensation similar to the biomembrane is obtained.

Further, the total amount of the polyurethane resin is, for example, 70% by mass or more, preferably 80% by mass or more, more preferably 90% by mass or more with respect to the total amount of the solid content of the inorganic filler-containing polyurethane dispersion. Further, the total amount of the polyurethane resin is, for example, 99% by mass or less, preferably 95% by mass or less.

Further, for example, when the polyurethane resin contains the low Tg polyurethane resin and the high Tg polyurethane resin, the ratio of the low Tg polyurethane resin is, for example, 10% by mass or more, preferably 20% by mass or more, more preferably 30% by mass or more with respect to the total amount of the solid content of the inorganic filler-containing polyurethane dispersion. Further, the ratio of the low Tg polyurethane resin is, for example, 60% by mass or less, preferably 50% by mass or less. Further, the ratio of the high Tg polyurethane resin is, for example, 30% by mass or more, preferably 40% by mass or more, more preferably 50% by mass or more with respect to the total amount of the solid content of the inorganic filler-containing polyurethane dispersion. Further, the ratio of the high Tg polyurethane resin is, for example, 90% by mass or less, preferably 70% by mass or less.

Further, the ratio of the inorganic filler is, for example, 1 part by mass or more, preferably 5 parts by mass or more with respect to 100 parts by mass of the total amount (solid content) of the polyurethane resin. Further, the ratio of the inorganic filler is, for example, 100 parts by mass or less, preferably 50 parts by mass or less, more preferably 10 parts by mass or less.

Further, the raw material polyurethane dispersion may contain an acrylic resin. By the acrylic resin, the peeling tactile sensation similar to the biomembrane is obtained. In the following, the raw material polyurethane dispersion containing the acrylic resin may be referred to as an acryl-containing polyurethane dispersion.

A weight average molecular weight of the acrylic resin is, for example, 3000 or more, preferably 10000 or more, more preferably 50000 or more. Further, the weight average molecular weight of the acrylic resin is, for example, 1000000 or less, preferably 500000 or less. The weight average molecular weight of the acrylic resin is measured as a molecular weight in terms of standard polystyrene by gel permeation chromatograph (GPC) (hereinafter, the same).

The acrylic resin can be classified in accordance with the degree of hydrophilicity. Examples of the acrylic resin include an acrylic resin having relatively high hydrophilicity (hereinafter, a high hydrophilic acrylic resin) and an acrylic resin having relatively low hydrophilicity (hereinafter, a low hydrophilic acrylic resin).

When an elution rate of the acrylic resin with respect to water is measured, the elution rate of the high hydrophilic acrylic resin is 10% by mass or more, and usually 50% by mass or less. Further, the elution rate of the low hydrophilic acrylic resin is below 10% by mass, and usually 1% by mass or more.

The elution rate of the acrylic resin with respect to water is measured by the method to be described below. In other words, a coating film of the acrylic resin is immersed in water at 23°C for 20 hours, and the mass of the coating film before and after the immersion is measured, thereby calculating a mass ratio (elution ratio) of the acrylic resin eluted in water. The coating film of the acrylic resin is, for example, prepared by coating an emulsion of the acrylic resin to a substrate so that a film thickness after drying becomes 100 to 200 µm, drying the resulting film at 23°C for 24 hours, and dehydrating the resulting film for 12 hours.

The raw material polyurethane dispersion may contain the low hydrophilic acrylic resin alone. Further, the raw material polyurethane dispersion may contain the high hydrophilic acrylic resin alone. Further, the raw material polyurethane dispersion may contain both the low hydrophilic acrylic resin and the high hydrophilic acrylic resin.

As the acrylic resin, preferably, the low hydrophilic acrylic resin is used. In other words, the raw material polyurethane dispersion preferably contains the low hydrophilic acrylic resin. By the low hydrophilic acrylic resin, it is possible to improve the peeling tactile sensation.

The acrylic resin can be obtained by a known method. The acrylic resin may be, for example, an acrylic resin solution, or may be an acrylic emulsion. Also, the acrylic resin can be obtained as a commercially available product.

The acrylic resin is preferably added to the high Tg polyurethane dispersion. That is, the acryl-containing polyurethane dispersion preferably contains the high Tg polyurethane dispersion.

In other words, the raw material polyurethane dispersion preferably contains the high Tg polyurethane resin, and furthermore, contains the acrylic resin. Further, the raw material polyurethane dispersion more preferably contains the high Tg polyurethane resin, and furthermore, contains the low hydrophilic acrylic resin. When the raw material polyurethane dispersion contains these, the peeling tactile sensation similar to the biomembrane is obtained.

Further, the acryl-containing polyurethane dispersion may further contain the low Tg polyurethane dispersion at an appropriate ratio.

In other words, the raw material polyurethane dispersion more preferably contains the high Tg polyurethane resin, furthermore, contains the acrylic resin, and in addition, contains the low Tg polyurethane resin. By the low Tg polyurethane resin, particularly, the peeling tactile sensation similar to the biomembrane is obtained.

The simulated biomembrane model is obtained by coating and drying of the acryl-containing polyurethane dispersion by a known casting method. In other words, in this case, the simulated biomembrane model is made of a composition containing the polyurethane resin and the acryl.

When the acryl-containing polyurethane dispersion contains the polyurethane resin (low Tg polyurethane resin and/or high Tg polyurethane resin) and the acrylic resin, the content ratio of these is appropriately set in accordance with its purpose and application.

For example, the total amount of the acrylic resin is, for example, 5% by mass or more, preferably 10% by mass or more, more preferably 20% by mass or more with respect to the total amount of the solid content of the acryl-containing polyurethane dispersion. Further, the total amount of the acrylic resin is, for example, 60% by mass or less, preferably 50% by mass or less. When the ratio of the acrylic resin is within the above-described range, particularly, the peeling tactile sensation similar to the biomembrane is obtained.

In particular, when the acrylic resin contains the high hydrophilic acrylic resin, the ratio of the high hydrophilic acrylic resin is, for example, 5% by mass or more, preferably 10% by mass or more with respect to the total amount of the solid content of the acryl-containing polyurethane dispersion. Further, the ratio of the high hydrophilic acrylic resin is, for example, 50% by mass or less, preferably 40% by mass or less.

Further, when the acrylic resin contains the low hydrophilic acrylic resin, the ratio of the low hydrophilic acrylic resin is, for example, 10% by mass or more, preferably 20% by mass or more with respect to the total amount of the solid content of the acryl-containing polyurethane dispersion. Further, the ratio of the low hydrophilic acrylic resin is, for example, 60% by mass or less, preferably 50% by mass or less.

When the ratio of the acrylic resin is within the above-described range, particularly, the peeling tactile sensation similar to the biomembrane is obtained.

Further, the total amount of the polyurethane resin is, for example, 40% by mass or more, preferably 50% by mass or more with respect to the total amount of the solid content of the acryl-containing polyurethane dispersion. Further, the total amount of the polyurethane resin is, for example, 95% by mass or less, preferably 90% by mass or less, more preferably 80% by mass or less.

Further, for example, when the polyurethane resin contains the low Tg polyurethane resin and the high Tg polyurethane resin, the ratio of the low Tg polyurethane resin is, for example, 5% by mass or more, preferably 10% by mass or more with respect to the total amount of the solid content of the acryl-containing polyurethane dispersion. Further, the ratio of the low Tg polyurethane resin is, for example, 50% by mass or less, preferably 40% by mass or less. Further, the ratio of the high Tg polyurethane resin is, for example, 30% by mass or more, preferably 40% by mass or more with respect to the total amount of the solid content of the acryl-containing polyurethane dispersion. Further, the ratio of the high Tg polyurethane resin is, for example, 90% by mass or less, preferably 80% by mass or less.

Further, the ratio of the acrylic resin is, for example, 10 parts by mass or more, preferably 50 parts by mass or more with respect to 100 parts by mass of the polyurethane resin (solid content). Further, the ratio of the acrylic resin is, for example, 100 parts by mass or less, preferably 90 parts by mass or less.

The raw material polyurethane dispersion may also contain the polyurethane resin, the inorganic filler, and the acrylic resin. In this case, the raw material polyurethane dispersion may contain the low Tg polyurethane resin, may also contain the high Tg polyurethane resin, or may contain both the low Tg polyurethane resin and the high Tg polyurethane resin. In addition, in this case, the simulated biomembrane model is made of a composition containing the polyurethane resin, the inorganic filler, and the acryl.

In addition, the raw material polyurethane dispersion may contain various additives. Examples of the additive include wetting agents, mold release agents, defoaming agents, silane coupling agents, alkoxysilane compounds, antioxidants, heat stabilizers, ultraviolet absorbers, plasticizers, antistatic agents, lubricants, anti-blocking agents, surfactants, dispersion stabilizers, colorant, pigments, and dyes. The ratio of the additive is appropriately set in accordance with its purpose and use.

The solid content concentration of the raw material polyurethane dispersion is, for example, 0.3% by mass or more, preferably 0.8% by mass or more, more preferably 1.2% by mass or more. Further, the solid content concentration of the raw material polyurethane dispersion is 50% by mass or less, preferably 35% by mass or less, more preferably 20% by mass or less, further more preferably 10% by mass or less, further more preferably 5% by mass or less, particularly preferably 3% by mass or less. When the solid content concentration of the raw material polyurethane dispersion is within the above-described range, it is possible to improve the mass productivity. In particular, the polyurethane dispersion has excellent smoothness at the time of coating even at relatively high concentration.

Such a polyurethane dispersion is used as a raw material for the simulated biomembrane model.

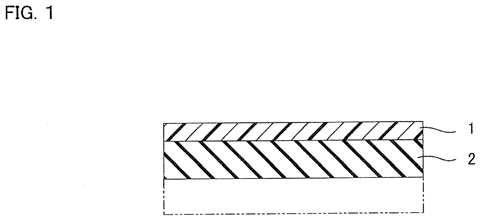

In FIG. 1, a simulated biomembrane model 1 is a cast film of a raw material polyurethane dispersion. The cast film is formed by a known casting method. More specifically, the simulated biomembrane model 1 is formed by coating and drying of the polyurethane dispersion onto a substrate 2.

Examples of the substrate 2 include resins. Examples of the resin include polyolefin resins, polyurethane resins, silicone resins, polyester resins, polyamide resins, and vinyl resins. Preferably, a polyurethane resin is used.

Further, the state of the resin is not particularly limited. For example, the resin may be in a crystalline state, may be in a non-crystalline state, or may be in a gel state. The resin is preferably in a gel state. As the substrate 2, preferably, a polyurethane gel (polyurethane resin in a gel state) is used. As the polyurethane gel, preferably, a gel layer in Examples 1 to 11 of International Patent Publication No. WO2017/010422 is used. As the polyurethane gel, further more preferably, a gel layer in Example 1 of International Patent Publication No. WO2017/010422 is used. By using such a polyurethane gel, the peeling tactile sensation similar to the biomembrane is obtained.

The polyurethane gel is an ultra-low hardness polyurethane elastomer. The polyurethane gel is defined by the Shore C hardness. The Shore C hardness (JIS K 7312 (1996)) of the polyurethane gel is, for example, 90 or less, preferably 80 or less, more preferably 70 or less, further more preferably 65 or less, and for example, 0 or more, preferably 20 or more, more preferably 40 or more, further more preferably 60 or more.

Also, the polyurethane gel preferably contains an internal mold release agent. By the internal mold release agent, the peeling tactile sensation similar to the biomembrane is obtained. Examples of the internal mold release agent include silicone-type mold release agents, phosphate ester-type mold release agents, alkyl phosphate-type mold release agents, and fatty acid ester-type mold release agents. As the internal mold release agent, preferably, a silicone-based mold release agent is used. These may be used alone or in combination of two or more.

When the polyurethane gel contains the internal mold release agent, the content ratio thereof is appropriately set in accordance with its purpose and application. For example, the ratio of the internal mold release agent is, for example, 0.1 parts by mass or more, preferably 0.5 parts by mass or more, more preferably 1 part by mass or more, further more preferably 1.5 parts by mass or more with respect to 100 parts by mass of the polyurethane gel. Further, the ratio of the internal mold release agent is, for example, 20 parts by mass or less, preferably 10 parts by mass or less, more preferably 5 parts by mass or less, further more preferably 3 parts by mass or less with respect to 100 parts by mass of the polyurethane gel.

The substrate 2 may be a single layer or a plurality of layers. The substrate 2 is preferably a single layer.

A thickness of the substrate 2 is, for example, 100 µm or more, preferably 500 µm or more. Further, the thickness of the substrate 2 is, for example, 2000 µm or less, preferably 1500 µm or less.

Further, the substrate 2 may be surface-treated. Examples of the surface treatment include plasma treatment and corona discharge treatment. The substrate 2 is preferably not surface-treated. By omitting the surface treatment of the substrate 2, it is possible to improve the mass productivity.

The simulated biomembrane model 1 is formed by a known casting method. More specifically, in the casting method, the substrate 2 is disposed, for example, on a support shown by a dashed line in FIG. 1.

Then, the raw material polyurethane dispersion is cast on the surface of the substrate 2, and the coating film is dried. A drying temperature is, for example, 5°C or more, preferably 10°C or more. Further, the drying temperature is, for example, 40°C or less, preferably 30°C or less. Further, the drying time is, for example, 30 minutes or more, preferably 1 hour or more. Further, the drying time is 1 day or less, preferably 6 hours or less.

Further, in this method, preferably, the coating film is subjected to annealing treatment. By the annealing treatment, it is possible to reduce the inclusion of water bubbles in the simulated biomembrane model, and furthermore, to improve the peeling tactile sensation.

An annealing temperature is, for example, 60°C or more, preferably 80°C or more, more preferably 100°C or more. Further, the annealing temperature is, for example, 200°C or less, preferably 150°C or less, more preferably 120°C or less. Further, the annealing time is, for example, 10 minutes or more, preferably 20 minutes or more, more preferably 30 minutes or more. Further, the annealing time is 120 minutes or less, preferably 100 minutes or less, more preferably 60 minutes or less, further more preferably 50 minutes or less.

Thus, the simulated biomembrane model 1 made of the cast film of the raw material polyurethane dispersion is obtained.

The thickness of the simulated biomembrane model 1 is, for example, 0.5 µm or more, preferably 1.5 µm or more. Further, the thickness of the simulated biomembrane model 1 is, for example, 10 µm or less, preferably 5 µm or less.

The simulated biomembrane model 1 is made of the cast film of the polyurethane dispersion. Therefore, the simulated biomembrane model 1 has a tactile sensation similar to the biomembrane. Furthermore, the simulated biomembrane model 1 has excellent industrial mass productivity. As a result, the simulated biomembrane model 1 is preferably used as the entire or a part of the simulated human body.

Examples of the application of the simulated biomembrane model 1 include simulated skin models, simulated organ models, and simulated eyeball models, and preferably, a simulated eyeball model is used. More preferably, the simulated biomembrane model 1 is used as a simulated internal limiting membrane in the simulated eyeball model.

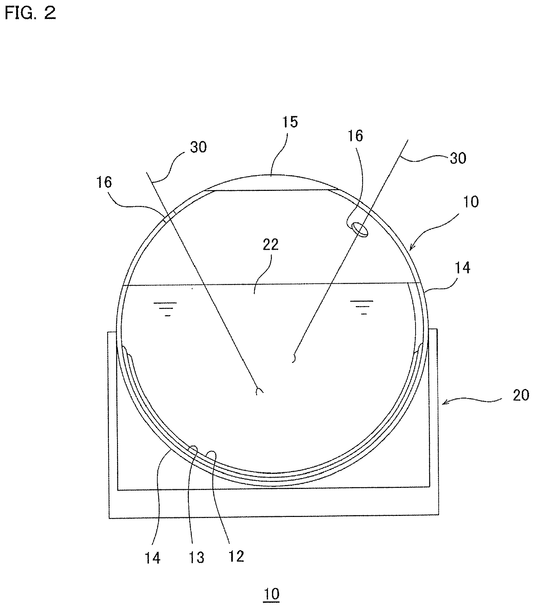

In FIG. 2, a simulated eyeball model 10 is a simulated eyeball model for eyeball surgical practice. The simulated eyeball model 10 has a hollow sphere shape which approximates the human eyeballs. A diameter of the simulated eyeball model 10 is, for example, 10 mm or more. Also, the diameter of the simulated eyeball model 10 is, for example, 30 mm or less.

An outer wall portion of the simulated eyeball model 10 is a simulated sclera 14 having a shape similar to the human eyeball. The outer wall portion of the simulated eyeball model 10 is made of, for example, silicone rubber. An elastic modulus of the simulated sclera 14 is, for example, 0.5 MPa or more, preferably 1 MPa or more. Further, the elastic modulus of the simulated sclera 14 is, for example, 20 MPa or less, preferably 10 MPa or less. A part of the simulated sclera 14 constitutes an elevated corneal region 15.

In the inner surface side of the simulated sclera (outer wall portion) 14, a region facing the corneal region 15 is provided with a simulated retina 13. The simulated retina 13 is a region where the optic nerve and macula are present in the human eyeballs.

The simulated retina 13 may be a single layer or a plurality of layers. For example, the simulated retina 13 may consist of two layers of a layer corresponding to the sensory nerve retina and a layer corresponding to the retinal pigment epithelium. Further, the simulated retina 13 does not distinguish the sensory nerve retina from the retinal pigment epithelium, and may consist of a single layer. From the viewpoint of mass productivity, preferably, the simulated retina 13 consists of a single layer.

More specifically, the simulated retina 13 is a substrate made of a resin. Examples of the resin include the above-described resins as the substrate 2. In other words, as the simulated retina 13, preferably, a polyurethane gel (polyurethane resin in a gel state) is used. As the polyurethane gel, preferably, a gel layer in Examples 1 to 11 of International Patent Publication No. WO2017/010422 is used. By using such a polyurethane gel, the peeling tactile sensation similar to the biomembrane is obtained.

Further, the polyurethane gel preferably contains the above-described internal mold release agent. By the internal mold release agent, it is possible to reduce the inclusion of water bubbles between the simulated retina 13 and a simulated internal limiting membrane 12 (described later), and furthermore, to obtain the peeling tactile sensation similar to the biomembrane. The ratio of the internal mold release agent is, for example, 0.1 parts by mass or more, preferably 0.5 parts by mass or more, more preferably 1 part by mass or more, further more preferably 1.5 parts by mass or more with respect to 100 parts by mass of the polyurethane gel. Further, the ratio of the internal mold release agent is, for example, 20 parts by mass or less, preferably 10 parts by mass or less, more preferably 5 parts by mass or less, further more preferably 3 parts by mass or less with respect to 100 parts by mass of the polyurethane gel.

The thickness of the simulated retina 13 is, for example, 100 µm or more, preferably 500 µm or more. Further, the thickness of the simulated retina 13 is, for example, 2000 µm or less, preferably 1500 µm or less.

The area of the simulated retina 13 is, for example, 30% or more, and for example, 50% or less with respect to the entire inner surface of the simulated eyeball model 10.

The upper surface of the simulated retina 13 is provided with the simulated internal limiting membrane 12. The simulated internal limiting membrane 12 is disposed so as to be in contact with the simulated retina 13.

The simulated internal limiting membrane 12 is the above-described simulated biomembrane model 1. In other words, the simulated internal limiting membrane 12 is made of the cast film of the raw material polyurethane dispersion described above.

The thickness of the simulated internal limiting membrane 12 is, for example, 1 µm or more, preferably 2 µm or more. Further, the thickness of the simulated internal limiting membrane 12 is, for example, 15 µm or less, preferably 10 µm or less.

The area of the simulated internal limiting membrane 12 is generally the same as the area of the simulated retina 13. More specifically, the area of the simulated internal limiting membrane 12 is, for example, 20% or more, and for example, 50% or less with respect to the entire inner surface of the simulated eyeball model 10.

In addition, the shape of the simulated internal limiting membrane 12 and the shape of the simulated retina 13 are not particularly limited, and may be spherical, or may be planar.

Also, the simulated eyeball model 10 may include an aqueous medium 22. More specifically, the simulated eyeball model 10 is filled with the aqueous medium 22. Thus, the simulated internal limiting membrane 12 is immersed with the aqueous medium 22. Examples of the aqueous medium 22 include water and physiological saline.

The simulated eyeball model 10 is, for example, set in a known cylindrical container 20. Thus, it is possible to fix the simulated eyeball model 10, and to subject the simulated eyeball model 10 to eyeball surgical practice. Further, though not shown, a model of a human head is prepared, and it is also possible to fit the simulated eyeball model 10 into an eyeball portion of the model.

When the simulated eyeball model 10 does not include the aqueous medium 22, the simulated eyeball model 10 is filled with the aqueous medium 22 before the eyeball surgical practice. Thus, the simulated internal limiting membrane 12 is immersed with the aqueous medium 22.

Then, in the eyeball surgical practice, a portion of the simulated sclera 14 is provided with an insertion port 16. The number of insertion ports 16 may be one or plurals. Next, an arbitrary surgical instrument 30 is inserted into the simulated eyeball model 10 from the insertion port 16. Examples of the surgical instrument 30 include forceps and cannulas. Then, for example, the simulated internal limiting membrane 12 is peeled with the surgical instrument 30.

In the simulated eyeball model 10, the simulated internal limiting membrane 12 is made of the cast film of the polyurethane dispersion. Therefore, the simulated eyeball model 10 has the tactile sensation similar to the biomembrane. As a result, the simulated eyeball model 10 is preferably used in the eyeball surgical practice.

### Examples

Next, the present invention is described based on Examples and Comparative Examples. The present invention is however not limited by Examples below. All designations of "part" or "parts" and "%" mean part or parts by mass and % by mass, respectively, unless otherwise particularly specified. The specific numerical values in mixing ratio (content ratio), property value, and parameter used in the following description can be replaced with upper limit values (numerical values defined as "or less" or "below") or lower limit values (numerical values defined as "or more" or "above") of corresponding numerical values in mixing ratio (content ratio), property value, and parameter described in the above-described "DESCRIPTION OF

### EMBODIMENTS".

### Examples 1 to 15

### (1) Simulated Retina

### ▪ Preparation of Polyol Composition

A vessel was charged with 100 parts by mass of amorphous polytetramethylene ether glycol (manufactured by Asahi Kasei Corporation, trade name: PTXG-1800), 0.01 parts by mass of dibutyltin dilaurate (IV) (manufactured by FUJIFILM Wako Pure Chemical Corporation), 0.1 parts by mass of Irganox 245 (manufactured by BASF SE, heat stabilizer), 0.1 part by mass of Tinuvin 234 (manufactured by BASF SE, HALS), and 0.1 parts by mass of defoaming agent (manufactured by BYK JAPAN KK, trade name: BYK-088) to be mixed to be shaken for about 1 minute. Next, the liquid mixture was heated in an oven at 80°C for 1 hour. Then, the shaking and heating was repeated 4 times.

Next, an internal mold release agent (DISPARLON LS-480, manufactured by Kusumoto Chemicals, Ltd.) was added to the mixture so as to have a ratio as described in Tables 1 to 2 with respect to the polyurethane gel. Thereafter, the mixture was stirred for 5 minutes with an automatic revolution stirrer, and defoamed for about 2 minutes under the vacuum environment. Thus, a polyol composition was obtained.

Next, an isocyanate composition (STABiO D-376N, pentamethylene diisocyanate derivative, manufactured by Mitsui Chemicals) was mixed with the polyol composition. At this time, an equivalent ratio (NCO/hydroxyl group) of isocyanate groups of the isocyanate composition to hydroxyl groups of the polyol composition was 0.90.

Next, the liquid mixture was stirred for about 5 minutes with the automatic revolution stirrer, and defoamed under the vacuum environment for about 2 minutes. Thereafter, the liquid mixture was poured into a sheet mold (film thickness of 1000 µm) which was heated at 80°C, and cured in the oven at 80°C for 4 hours. After the curing, the sheet mold was left to stand at room temperature for 1 hour or more. Thereafter, the molded product was demolded from the sheet mold, and punched with a round punching mold having a diameter of 10 mm. Thus, a simulated retina made of polyurethane gel (PU gel) was obtained. The shore C hardness of the polyurethane gel was measured by a Type C hardness test of JIS K 7312 (1996). The shore C hardness was 63.

### (2) Simulated Internal Limiting Membrane

The following commercially available products were prepared and mixed so as to obtain a solid content ratio described in Tables 1 to 2, thereby obtaining a liquid mixture having the solid content concentration of 1.53% by mass. Thereafter, a coating film was formed on the surface of the simulated retina using the liquid mixture by the casting method.

More specifically, by using a micropipette (manufactured by Eppendorf SE, Research plus V), the liquid mixture was coated onto the surface of the simulated retina, and next, the liquid mixture was dried at room temperature for 2 hours or more. Thus, a dried coating film having a film thickness of about 100 µm was obtained. Thereafter, the dried coating film was subjected to annealing treatment under the conditions described in Tables 1 to 2 to be then left to stand at room temperature for 1 week or more. Thus, the simulated internal limiting membrane as a simulated biomembrane model was obtained on the simulated retina.

Low Tg polyurethane resin: TAKELAC W-6110 (trade name), low Tg polyurethane dispersion, Tg -20°C, anionic polyurethane resin, solid content concentration of 32% by mass, manufactured by Mitsui Chemicals
High Tg polyurethane resin: TAKELAC W-615 (trade name), high Tg polyurethane dispersion, Tg 103°C, anionic polyurethane resin, solid content concentration of 35% by mass, manufactured by Mitsui Chemicals
Inorganic filler: KUNIPIA-F (trade name), purified bentonite, manufactured by KUNIMINE INDUSTRIES CO., LTD.
High hydrophilic acrylic resin: BONRON HS-50 (trade name), acrylic emulsion, elution rate with respect to water of 30% by mass, solid content concentration of 18 to 22% by mass, manufactured by Mitsui Chemicals
Low hydrophilic acrylic resin: BARIASTAR-ASN1004K (trade name), acrylic emulsion, elution rate with respect to water of 4% by mass, solid content concentration of 17 to 19% by mass, manufactured by Mitsui Chemicals
Wetting agent: BYK-348 (trade name), silicone-based surfactant, manufactured by BYK JAPAN KK
PVA: KURARAY POVAL 9-88 (trade name), polyvinyl alcohol aqueous solution, manufactured by KURARAY CO., LTD.

### Comparative Example 1

A simulated retina and a simulated internal limiting membrane were obtained in the same manner as in Example 9, except that the internal mold release agent was not added to the simulated retina.

### Comparative Example 2

### (1) Simulated Retina

A simulated retina was obtained in conformity with Test Example 1 of International Patent Publication No. WO2018/097031. In other words, 10 parts by mass of BASE of heat-curing dimethyl silicone rubber (trade name: DOW CORNING TORAY SILPOT 184 W/C, manufactured by Dow Corning Toray Co., Ltd.) and 1 part by mass of curing catalyst (CAT) were mixed, thereby preparing a silicone rubber coating material. Then, the silicone rubber coating material was coated onto a glass plate, and heated at 90°C for 10 minutes, thereby obtaining a simulated retina made of silicone rubber.

### (2) Simulated Internal Limiting Membrane

The formation of the simulated internal limiting membrane was attempted in conformity with Test Example 1 of International Patent Publication No. WO2018/097031. In other words, each component was added to distilled water and mixed so that a polyvinyl alcohol resin (degree of polymerization of 1000, degree of saponification of 88%) was 100 mM, a cross-linking agent (glutaraldehyde) was 500 mM, the filler for coloring (SCP-2000, manufactured by Nitta Gelatin Inc.) was 1 mM, and a coloring agent (brilliant blue FCF) was 40 µM. Then, the liquid mixture (PVA solution) was coated onto the surface of the simulated retina, and after the coating, the coated product was heated at 70°C for 1 hour, and furthermore, heated at 120°C for 1 hour. Thereafter, the coating film after heating was immersed in a catalyst (hydrochloric acid solution of 1 M) under room temperature conditions for about 2 minutes to 10 minutes to be cross-linked. Thereby, the simulated internal limiting membrane was obtained on the simulated retina.

### Comparative Example 3

A simulated retina made of polyurethane gel was formed in the same manner as in Comparative Example 1. Thereafter, a simulated internal limiting membrane was obtained on the simulated retina using a liquid mixture (PVA solution) containing the polyvinyl alcohol resin of Comparative Example 2 on the simulated retina.

### <Evaluation>

### (1) Peeling Tactile Sensation

The peeling tactile sensation was evaluated by a sensory test in which the simulated internal limiting membrane was peeled from the surface of the simulated retina. In other words, whether or not the releasability in peeling the simulated internal limiting membrane from the simulated retina approximates the releasability in peeling the internal limiting membrane from the retina in the actual human eye was evaluated.

More specifically, distilled water was coated onto the entire surface of the simulated internal limiting membrane, and the simulated internal limiting membrane was immersed in water for 1 hour. Thereafter, the simulated internal limiting membrane was peeled from the simulated retina using forceps, while viewing with a microscope, and the tactile sensation was evaluated.

In the evaluation, three physicians peeled the simulated internal limiting membrane from the surface of the simulated retina using an actual surgical instrument (forceps). Then, the sensation of peeling the simulated internal limiting membrane from the simulated retina was compared with the sensation of peeling the internal limiting membrane from the retina of a real human eye. As the sensations, for example, the ease of grasping the simulated internal limiting membrane, the ease of breaching the simulated internal limiting membrane, the hardness of the simulated internal limiting membrane, the thickness of the simulated internal limiting membrane, the strength of the simulated internal limiting membrane, the stretching of the simulated internal limiting membrane, the pressure-sensitive adhesiveness of the simulated internal limiting membrane, the adhesiveness between the simulated retina and the simulated internal limiting membrane, and the ease of peeling of the simulated internal limiting membrane were evaluated. Then, the evaluation of the three physicians were quantified on a 10 scale, and an average value of these scores was referred to as overall evaluation.

In the quantification, the magnitude of the difference between the peeling of the simulated internal limiting membrane and the peeling of the actual internal limiting membrane was scored using the examiners' sensation as a reference. That is, the lower the score, the closer the peeling of the simulated internal limiting membrane to the peeling of the actual internal limiting membrane.

### (2) Water Bubbles

The amount and the size of water bubbles contained in the simulated internal limiting membrane were observed with a digital microscope VHX-6000 (manufactured by KEYENCE CORPORATION), and evaluated. The criteria for the evaluation are described as follows.

### (Evaluation of Amount)

Large: The area occupied by the water bubbles per 9 mm² of the simulated internal limiting membrane was 1 mm² on average (the area ratio occupied by the water bubbles of about 11%).

Small: The area occupied by the water bubbles per 9 mm² of the simulated internal limiting membrane was 0.01 mm² or more and below 1 mm² on average.

Absence: The area occupied by the water bubble per 9mm² of the simulated internal limiting membrane was below 0.01 mm² on average.

### [Table 1]

**Table 1**

| No. | | | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|---|
| Simulated Internal Limiting Membrane Mixing Formulation (% by mass) Based on Solid Content | PUD | Low Tg Polyurethane Resin | 99.9 | - | 69.9 | 41.9 | 52.9 | - | - | 19.9 | 10.0 |
| | | High Tg Polyurethane Resin | - | 99.9 | - | 53.0 | 42.0 | 79.9 | 89.9 | 40.0 | 44.9 |
| | Inorganic Filler | | - | - | 30.0 | 5.0 | 5.0 | - | - | - | - |
| | Acrylic Emulsion | High Hydrophilic Acrylic Resin | - | - | - | - | - | 20.0 | 10.0 | 40.0 | - |
| | | Low Hydrophilic Acrylic Resin | - | - | - | - | - | - | - | - | 45.0 |
| | Additive | Wetting Agent | 0.1 | 0.1 | 0.1 | 0.1 | 0.1 | 0.1 | 0.1 | 0.1 | 0.1 |
| | PVA | | - | - | - | - | - | - | - | - | - |
| | Total Sum | | 100 | 100 | 100 | 100 | 100 | 100 | 100 | 100 | 100 |
| Simulated Retina Mixing Formulation Based on Solid Content | Resin | Kind | PU gel | PU gel | PU gel | PU gel | PU gel | PU gel | PU gel | PU gel | PU gel |
| | | Parts by Mass | 100 | 100 | 100 | 100 | 100 | 100 | 100 | 100 | 100 |
| | Internal Mold Release Agent | Parts by Mass | 2 | 2 | 2 | 2 | 2 | 2 | 2 | 2 | 2 |
| Annealing Treatment | Temperature | (°C) | - | - | - | - | - | - | - | - | - |
| | Time | (minutes) | - | - | - | - | - | - | - | - | - |
| Evaluation | Peeling Tactile Sensation | Average Value of Three People | 5.7 | 6.3 | 5.0 | 3.0 | 3.7 | 4.3 | 4.7 | 3.0 | 1.7 |
| | Water Bubbles | Amount | Absence | Absence | Absence | Absence | Absence | Large | Large | Large | Large |

### [Table 2]

**Table 2**

| No. | | | Ex. 10 | Ex. 11 | Ex. 12 | Ex. 13 | Ex. 14 | Ex. 15 | Comparative Ex. 1 | Comparative Ex. 2 | Comparative Ex. 3 |
|---|---|---|---|---|---|---|---|---|---|---|---|
| Simulated Internal Limiting Membrane Mixing Formulation (% by mass) Based on Solid Content | PUD | Low Tg Polyurethane Resin | 10.0 | 10.0 | 10.0 | 10.0 | 10.0 | - | 10.0 | - | - |
| | | High Tg Polyurethane Resin | 44.9 | 44.9 | 44.9 | 44.9 | 44.9 | 54.9 | 44.9 | - | - |
| | Inorganic Filler | | - | - | - | - | - | - | - | - | - |
| | Acrylic Emulsion | High Hydrophilic Acrylic Resin | - | - | - | - | - | - | - | - | - |
| | | Low Hydrophilic Acrylic Resin | 45.0 | 45.0 | 45.0 | 45.0 | 45.0 | 45.0 | 45.0 | - | - |
| | Additive | Wetting Agent | 0.1 | 0.1 | 0.1 | 0.1 | 0.1 | 0.1 | 0.1 | - | 0.1 |
| | PVA | | - | - | - | - | - | - | - | 100 | 99.9 |
| | Total Sum | | 100 | 100 | 100 | 100 | 100 | 100 | 100 | 100 | 100 |
| Simulated Retina Mixing Formulation Based on Solid Content | Resin | Kind | PU gel | PU gel | PU gel | PU gel | PU gel | PU gel | PU gel | Silicone | PU gel |
| | | Parts by Mass | 100 | 100 | 100 | 100 | 100 | 100 | 100 | 100 | 100 |
| | Internal Mold Release Agent | Parts by Mass | 10 | 4 | 2 | 2 | 2 | 2 | 0 | 0 | 2 |
| Annealing Treatment | Temperature | (°C) | 110 | 110 | 110 | 110 | 110 | - | - | - | 110 |
| | Time | (minutes) | 40 | 40 | 40 | 20 | 60 | - | - | - | 40 |
| Evaluation | Peeling Tactile Sensation | Average Value of Three People | 2.3 | 1.7 | 1.3 | 2.3 | 3.7 | 2.3 | Crack | 7.3 | 6.7 |
| | Water Bubbles | Amount | Large | Small | Absence | Small | Absence | Large | - | Absence | Absence |

While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims.

### INDUSTRIAL APPLICATION

The simulated biomembrane model and the simulated eyeball model of the present invention are preferably used in eyeball surgery.

### Description of Reference Numerals

- 1: Simulated biomembrane model
- 2: Substrate

## Claims

1. A simulated biomembrane model made of:
a cast film of a polyurethane dispersion.

2. The simulated biomembrane model according to claim 1, wherein
the polyurethane dispersion includes a low Tg polyurethane resin having a glass transition temperature of below 20°C.

3. The simulated biomembrane model according to claim 2, wherein
the polyurethane dispersion further includes an inorganic filler.

4. The simulated biomembrane model according to claim 3, wherein
a ratio of the inorganic filler is 2% by mass or more and 10% by mass or less with respect to the total amount of the solid content of the polyurethane dispersion.

5. The simulated biomembrane model according to claim 2, wherein
the polyurethane dispersion further includes a high Tg polyurethane resin having a glass transition temperature of 20°C or more.

6. The simulated biomembrane model according to claim 1, wherein
the polyurethane dispersion includes a high Tg polyurethane resin having a glass transition temperature of 20°C or more.

7. The simulated biomembrane model according to claim 6, wherein
the polyurethane dispersion further includes an acrylic resin.

8. The simulated biomembrane model according to claim 7, wherein
the acrylic resin includes a low hydrophilic acrylic resin.

9. The simulated biomembrane model according to claim 7, wherein
a ratio of the acrylic resin is 20% by mass or more and 50% by mass or less with respect to the total amount of the solid content of the polyurethane dispersion.

10. The simulated biomembrane model according to claim 6, wherein
the polyurethane dispersion further includes a low Tg polyurethane resin having a glass transition temperature of below 20°C.

11. The simulated biomembrane model according to claim 1 being a simulated internal limiting membrane.

12. A simulated eyeball model for eyeball surgical practice comprising:
a simulated retina and
a simulated internal limiting membrane in contact with the simulated retina, wherein
the simulated internal liming membrane is the simulated biomembrane model according to claim 1.

13. The simulated eyeball model according to claim 12, wherein
the simulated retina includes a polyurethane gel and an internal mold release agent.

14. The simulated eyeball model according to claim 13, wherein
a ratio of the internal mold release agent is 0.5 parts by mass or more and 10 parts by mass or less with respect to 100 parts by mass of the polyurethane gel.
